# EUROPEAN PATENT APPLICATION

(11) **EP 4 800 894 A1**
(43) Date of publication of application: **02.09.2026**
(21) Application number: 25160195.1
(22) Date of filing: 26.02.2025
(51) Int. Cl.: H02K 7/18, H02K 1/20, F03D 80/60, H02K 9/04, H02K 9/02

(54) **ELECTRIC GENERATOR FOR A WIND TURBINE, STATOR DEVICE FOR AN ELECTRIC GENERATOR, AND WIND TURBINE**

(71) Applicant: Siemens Gamesa Renewable Energy A/S, 7330 Brande (DK)
(72) Inventor: Jensen, Simon Vyff, 7160 Tørring (DK); Jensen, Kim Robert Braun, 8600 Silkeborg (DK)
(74) Representative: SGRE-Association

(57) **Abstract**

The invention relates to an electric generator (7) for a wind turbine (1), comprising a stator (11), a rotor (10), which is rotatably mounted with respect to the stator (11), and an air cooling system (32) for guiding an airflow flowing along an airpath (33) which extends through the electric generator (7), wherein the stator (11) comprises at least one structural component (21) having a hollow cross sectional profile and at least one first opening (39) and at least one second opening (40), wherein each of the openings (39, 40) leads into a hollow interior of the respective structural component (21), wherein the at least one first opening (39) is arranged on or fluidly communicates with a first location of the airpath (33), wherein the at least one second opening (40) is arranged on or fluidly communicates with a second location of the airpath (33), wherein within the at least one first opening (39) and/or within the at least one second opening (40) at least one sealing device (38) is arranged which prevents the airflow from flowing through the interior.

## Description

The present invention relates to an electric generator for a wind turbine, comprising a stator, a rotor, which is rotatably mounted with respect to the stator, and an air cooling system for guiding an airflow flowing along an airpath which extends through the electric generator.

A wind turbine typically comprises an electric generator or an electric machine, respectively, and a rotatably mounted hub with several blades. The wind-driven rotation of the hub is transferred to the rotor of the electric generator. The electric generator is typically arranged within a nacelle, wherein the nacelle is arranged on top of a tower of the wind turbine. Modern wind turbines can have a total height of tens or hundreds of meters. The output power of the electric generator can be in the range of multi-megawatts, particularly between 1 and 40 megawatts.

For generating energy, components of the stator and the rotor magnetically interact with each other. This interaction, however, causes the generation of heat such that a crucial aspect regarding the operation of an electric generator is to provide a sufficient cooling of these components. Typically, the cooling air of an airflow is guided to these components, wherein heat is transferred from these components to the cooling air.

Regarding the mechanical structure of the stator, typically structural components like hollow bars are provided to realize a support structure of the stator for supporting a lamination stack. Examples for respective support structures are disclosed in WO 2021 / 170 306 A1 and WO 2022 / 263 070 A1.

It is an object of the invention to provide an enhanced concept for an electric generator of a wind turbine, particularly regarding the cooling system and mechanical aspects.

According to the present invention, this object is solved by an electric generator as initially described, wherein the stator comprises at least one structural component having a hollow cross sectional profile and at least one first opening and at least one second opening, wherein each of the openings leads into a hollow interior of the respective structural component, wherein the at least one first opening is arranged on or fluidly communicates with a first location of the airpath, wherein the at least one second opening is arranged on or fluidly communicates with a second location of the airpath, wherein within the at least one first opening and/or within the at least one second opening at least one sealing device is arranged which prevents the airflow from flowing through the interior.

The electric generator comprises the stator and the rotatably mounted rotor, which can be arranged in a housing of the electric generator. Electromagnetically active components, particularly lamination stacks and/or windings and/or permanent magnets, of the stator and of the rotor are provided, wherein electromagnetic interactions between the electromagnetic active components cause the generation of electric energy while the rotor rotates. This in turn causes the generation of heat. The electromagnetically active components are cooled by the air cooling system, i.e., by the air flowing through the airpath. The air cooling system can comprise an air pump, particularly a ventilator, to drive the airflow. The air cooling system can be an open system, wherein the airflow is guided from an air inlet to an air outlet. Fresh air from the outside of the wind turbine is provided through the inlet and, after the air has flown through the airpath, expelled into the outside via the outlet. The air cooling system can be a closed system in which the airpath is a circuit. A heat exchanger can be present in the airpath, wherein heat is transferred from the air to the heat exchanger.

According to the present invention, the first location and the second location are arranged within the airpath on different positions, such that the first location and the second location are connected by the section of the airpath which extends between the first location and the second location. The respective location can be a position or a part or a section of the airpath. Since the openings are arranged on or fluidly communicates with these locations, there is basically another fluidic connection between the first location and the second location, i.e., the interior of the structural component which extends between the respective openings. This, however, could potentially lead to an airflow from the first location to the second location via the interior of the structural component, which is disadvantageous, since the correct operation of the air cooling system typically requires that the air flows through the airpath and not through other components like the structural component. To prevent the air from flowing from the first location to the second location via the interior of the structural component and to ensure that the air flows from the first location to the second location via the section of the airpath which extends between these locations, the sealing device is provided to close the at least one first and/or second opening.

According to the present invention, the sealing device is arranged within the respective opening. Preferably, the sealing device is arranged within the cross sectional profile. Hence the extent of the sealing device is at maximum as large as the opening or the extent of the hollow interior of the structural component. Compared to another option, which is not part of the present invention, the sealing device can be arranged cap-like on the opening, which, however, leads to the problem that there is often not a sufficient fit between the sealing device and the opening or the structural component, respectively. Due to fabrication tolerances, the dimensions of the structural component are often not very precise which means that, if the respective profile is too narrow, the sealing device is loose or, if the respective profile is too large, the sealing device cannot be mounted without violence. According to the present invention, the extent of the sealing device can be smaller than the extent of the opening or of the hollow interior such that the sealing device can be arranged on its designated position without problems.

Preferably, a clearance is present between the sealing device and at least one wall of the respective structural component. Changes of the dimensions of different structural components can be compensated by different dimensions of the clearance. There can be a loose fit between the sealing device and the respective structural component, particularly after the sealing device has been is attached to the respective structural component by an attaching means. The clearance can be sealed by a, particularly air-tight, sealing material. The sealing material can be elastic. The sealing material can be applicated into the gap which realizes the clearance, particularly after the sealing device has been brought into its designated position. The sealing material can abrogate the loose fit. The sealing material ensures that air cannot enter the interior of the structural component via the clearance.

The sealing device can be or can comprise a, particularly flat or planar, sealing plate. The dimensions of the sealing plate along a plane which extends along the sealing plate can be at least ten, preferably at least a hundred, times as large as the thickness of the sealing plate. The sealing device, for instance the sealing plate, can consist of an airtight material, e.g., of a metal and/or a plastic material.

The sealing device can be attached to the respective structural component by at least one attaching means. For instance, the attaching means realizes a screw connection or a welding connection or the like. The sealing device can be attached to at least one wall of the structural component.

Preferably, at least one lateral flange, which can extend perpendicularly away from the sealing plate, can be arranged on the sealing plate, wherein the attaching means, particularly the screw connection, connects the at least one lateral flange with the respective structural component. The flange can direct away from the interior of the structural component. The flange and the structural component can have a bore each, wherein these bores are arranged collinearly to each other, wherein a bolt can be arranged within these bores. The bolt can be threaded and secured by a nut. Preferably, at least one pair consisting of two lateral flanges which are arranged on opposite sides of the sealing plate are provided.

Regarding particularly a state where the sealing component is not present, the interior of the at least one structural component which leads from the at least one first opening to the at least one second opening can bypass a cooling section of the airpath in which heat is transferred from a component of the electric generator to be cooled to the air of the airflow. Again Regarding particularly the state where the sealing component is not present, the interior of the respective structural component which leads from the at least one first opening to the at least one second opening can bypass a transfer section of the airpath in which heat is transferred from the air of the airflow to a cooling component of the cooling system. Hence, if at least a part of the air would bypass the cooling section and/or the transfer section, the cooling power would be reduced. This is prevented by the sealing device. The cooling section can be an air gap arranged between the stator and the rotor and/or a radially inner or outer side of the stator and/or or a radially inner or outer side of the rotor. The cooling component can be a heat exchanger for conveying heat away from the airflow.

Preferably, the at least one structural component is a part of a support structure of the stator for supporting at least one lamination stack. The support structure can be lattice-like. The lamination stack can consist of several iron plates arranged upon each other. Optionally, the at least one structural component is a bar. The bar can consist of metal, for instance steel. The bar can be made from a monolithic, particularly rectangular, hollow metal profile. The bar can be a longitudinal bar which extends along a longitudinal direction of the electric generator. The support structure can comprise at least one circumferential bar and/or plate which extends along a circumferential direction of the electric generator, wherein the at least one circumferential bar and/or plate is arranged perpendicular with respect to the at least one longitudinal bar. The longitudinal bars can extend parallel to each other. The circumferential bars and/or plates can extend parallel to each other.

The at least one structural component, particularly the at least one longitudinal bar, can comprise an open or a closed cross-section. The open cross section can be U-shaped. The at least one structural component, particularly the at least one longitudinal bar, comprises a rectangular cross section. Hence, the structural component can consist of four walls, wherein the walls are pairwise parallel to each other, wherein adjacent walls are perpendicular to each other.

The at least one structural component, particularly the at least one longitudinal bar, can comprise at least one attaching bore for attaching the lamination stack to the respective structural component and/or at least one access bore for allowing tools to be inserted into the hollow interior of the respective structural component. The at least one bore can be the first opening or the second opening. The attaching bore and/or the access bore can be through holes which run through a wall of the structural component. The attaching bores and/or the access bores can be arranged along a line. This line particularly extends along a longitudinal direction of the respective bar. The attaching bores and the access bores can be arranged on opposite walls of the respective bar. The at least one attaching bore and/or the at least one access bore can fluidly communicate with the first location or the second location via radial air channels provided within the lamination stack or between several lamination stacks.

According to a preferred embodiment of the present invention, the at least one first opening or the at least one second opening is realized by at least one open front end, particularly by at least one open front end face, of the respective longitudinal bar, wherein the first location and/or the second location is arranged on a longitudinal front end of the stator. A cutting plane for realizing the opening can be perpendicular with respect to a longitudinal direction of the longitudinal bar. However, it is also possible that the respective cutting plane is tilted with respect to the longitudinal direction, wherein an angle between the cutting plane and the longitudinal direction can be smaller than 90°.

Particularly, a finger plate which extends along a circumferential direction of the electric generator supports stator end windings, wherein the finger plate is arranged on a front end face of the at least one longitudinal bar. The finger plate can comprise a disc- or ring like structure. Fingers of the finger plate can protrude radially outwards, wherein the windings are arranged within gaps between the fingers. The windings can extend around the fingers in a U-shaped manner.

Furthermore, the present invention relates to a stator device for an electric generator according to the foregoing description. According to the present invention, the object is solved by this stator device, wherein the stator device is the stator of the electric generator. Alternatively, the object is solved by this stator device, wherein the stator device is a stator segment of the stator of the electric generator. For reasons for transportability, the stator itself can be divided into several stator segments, which each can comprise a lamination stack defining stator teeth and carrying the stator windings. The complete stator consists of several stator segments which are arranged along the circumferential direction and attached to each other. Each of the stator segments can extend along a part of the complete circumference of the stator. The number of stator segments forming the stator can be between four and twentyfour. Hence, each of the stator segments can cover an angle interval between 90° and 15°, particularly 45° or 30°. All features, advantages, and aspects which have been explained with respect to the electric generator according to the present invention also hold true for the stator device according to the present invention and vice versa.

Finally, the present invention relates to a wind turbine, wherein the object is solved by the wind turbine comprising an electric generator according to the respective description above. All features, advantages, and aspects which have been explained with respect to the electric generator according to the present invention and/or with respect to the stator device according to the present invention also hold true for the wind turbine according to the present invention and vice versa.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a view of a wind turbine according to an embodiment of the present invention, comprising an electric generator according to an embodiment of the present invention, wherein the electric generator comprises a stator which consists of several stator segments according to an embodiment of the present invention,
- Fig. 2: a cut through the electric generator of the wind turbine of fig. 1 wherein the cutting plane is indicated by the line II - II in fig. 1,
- Fig. 3-5: perspective views of the stator segment of the generator of fig. 2,
- Fig. 6-8: schematic sketches of a longitudinal cut through the generator of fig. 2 to illustrate a cooling system of this generator,
- Fig. 9: a perspective close-up view of the stator segment of the generator of fig. 2,
- Fig. 10: a cut through a front end of a longitudinal bar of the stator segment of fig. 9, and
- Fig. 11: a cut through a screw connection arranged at the front end of fig. 10.

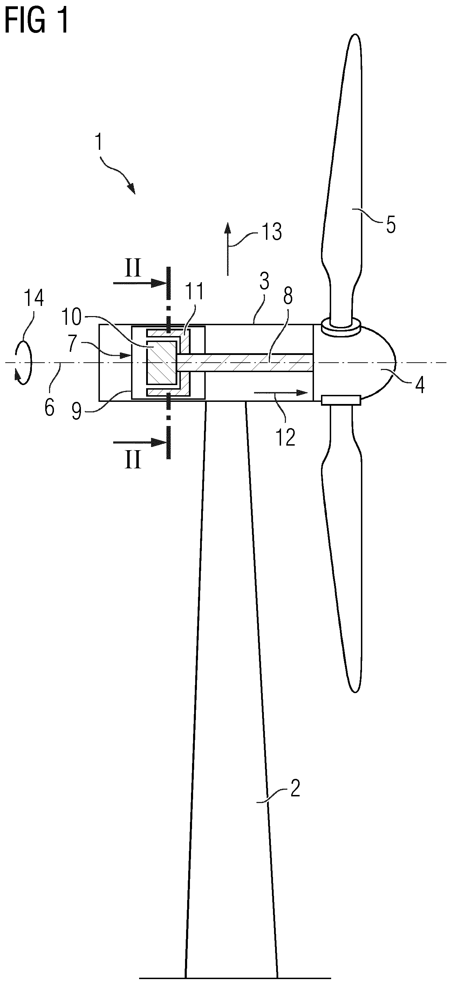

Fig. 1 shows a wind turbine 1 according to an embodiment of the present invention. The wind turbine 1 comprises a tower 2 on which a nacelle 3 is arranged. On the front of the nacelle 3, a hub 4 with several, particularly three, blades 5 is provided. The hub 4 is mounted such that it can rotate around a rotation axis 6. The wind-driven rotation of the hub 4 is transferred to an electric generator 7 according to an embodiment of the present invention which is located within the nacelle 3. The rotation of the hub 4 is transferred to the electric generator 7 by a main shaft 8 which extends along the rotation axis 6.

The electric generator 7 comprises a stator 10 and a rotor 11, exemplarily an inner stator 10 and an outer rotor 11. The stator 10 and the rotor 11 are arranged within a housing 9 of the generator 7. While the stator 10 is non-rotatably mounted, the rotor 11 is connected to the main shaft 8 such that the rotation of the hub 4 is directly transferred to the rotor 11. The wind turbine 1 is a direct drive wind turbine. Alternatively, the shaft 8 and the rotor 11 can be connected by a gear assembly. A bearing assembly (not shown in fig. 1) is provided to hold the shaft 8 in position. While the total height of the wind turbine 1 is in the order of tens or hundreds of meters, the output power of the wind turbine 1 which is generated by the generator 7 can be in the range of multi-megawatts, particularly between 1 and 40 megawatts.

The rotation axis 6 is arranged horizontally but can be also tilted with respect to a horizontal direction. The rotation axis 6 extends along a longitudinal direction 12, wherein a radial direction 13 is perpendicularly with respect to the longitudinal direction 12 and points radially outwards away from the rotation axis 6. A circumferential direction 14 is given by the direction of a point which rotates around the rotation axis 6. The directions 12, 13, 14 refer not only to the generator 7, but also to the stator 10 and the rotor 11 as well as to stator segments 16 which are stator devices 50 according to an embodiment of the present invention.

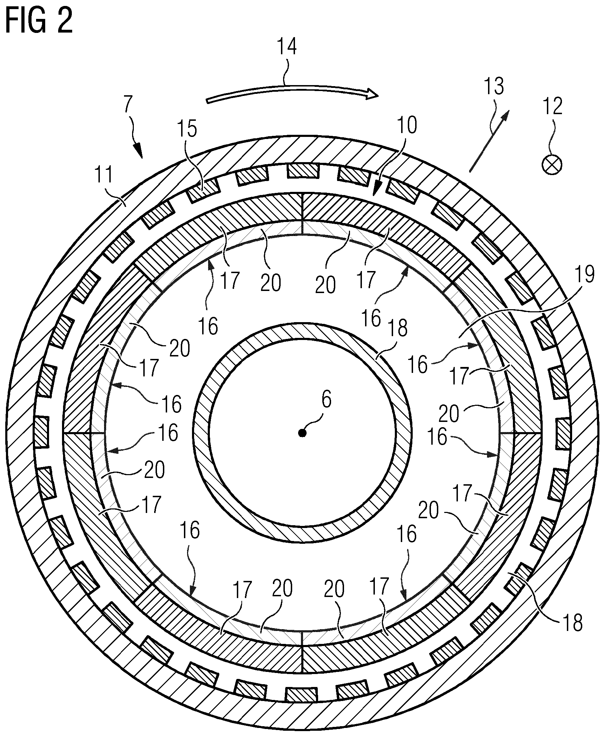

Fig. 2 shows a cross-sectional view of the generator 7, wherein the sectional plane, which is indicated by the line II - II in fig. 1, is perpendicular to the longitudinal direction 12. The stator 10 is attached to the housing 9 (not shown in fig. 2). Permanent magnets 15 are arranged on the rotor 11 on a side facing the stator 10. Stator 10 comprises several stator segments 16, each comprising lamination stacks 17. In this example, eight stator segments 16 are provided.

Between the stator 10 and the rotor 11, an air gap 18 is present. Stator segments 16 are mounted on a stator support structure 19 of the electric generator **7.** A rotation of the rotor 11 with respect to the stator 10 induces an electrical current into stator coils formed by stator windings.

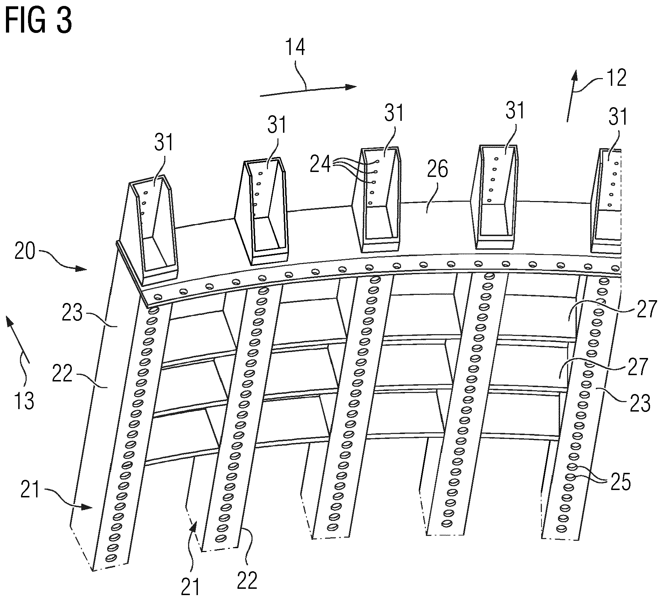

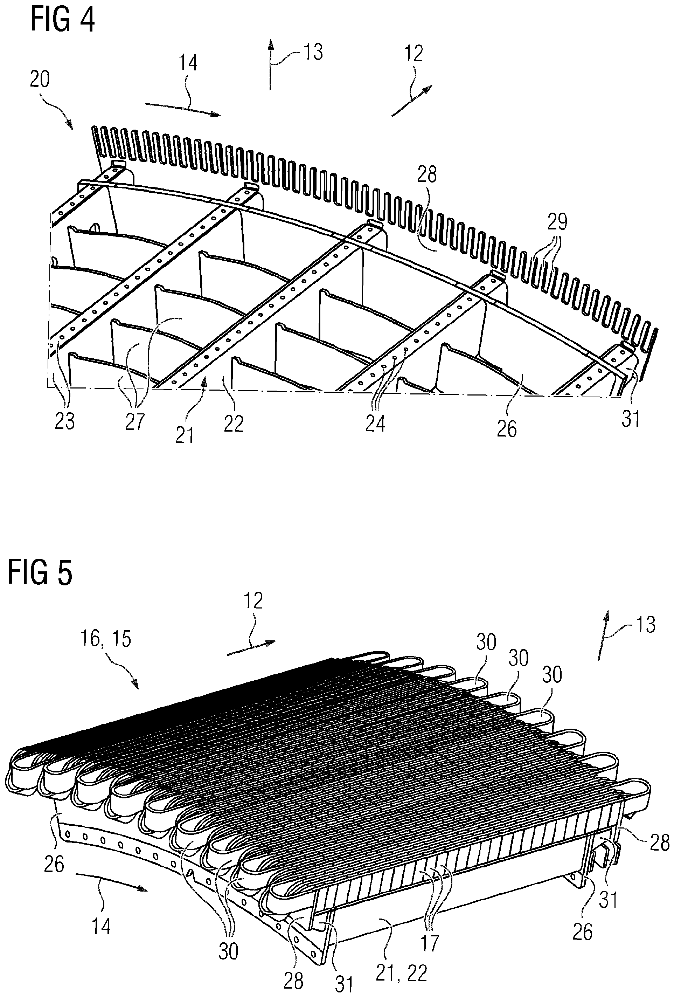

Next, it is referred to figures 3 and 4 which show perspective views of a segment-like support structure 20 of one of the segments 16, wherein the support structure 20 supports the lamination stacks 17 and the stator windings which are not shown in figures 3 and 4. Support structure 20 comprises several structural components 21 being longitudinal bars 22 which extend along the longitudinal direction 12. Longitudinal bars 22 have a hollow cross sectional profile with a rectangular geometry. Longitudinal bars 22 are made from monolithic and rectangular metal profiles such that the longitudinal bars 22 consist of four walls 23, wherein opposing walls 23 are pairwise parallel and adjacent walls 23 are pairwise perpendicular to each other.

Each of the longitudinal bars 22 comprises several attaching bores 24 for attaching the lamination stacks 17 and the stator windings to the support structure 20. Furthermore, each of the longitudinal bars 22 comprises several access bores 25 for allowing tools to be inserted into the hollow interior of the respective longitudinal bar 22. The attaching bores 24 and the access bores 25 are through holes which run through the respective wall 23. The attaching bores 24 and the access bores 25 are arranged along a line, wherein the line regarding the attaching bores 24 and the line regarding the access bores 25 are arranged on opposite walls 23.

The support structure 20 comprises two circumferential bars 26 being longitudinal end plates attached to the longitudinal bars 22 and extending along the circumferential direction 14. Open front ends 31 of the longitudinal bars 22 run through respective holes of the circumferential bars 26. Furthermore, several circumferential plates 27 which extend along the circumferential direction 14 are arranged between two adjacent longitudinal bars 22.

Another component of the support structure 20, which is not shown in fig. 3 but in fig 4, is a finger plate 28 which extends along the circumferential direction 14. The finger plate 28 is arranged on the front and faces of the longitudinal bars 22 and comprise fingers 29 which extend along the radial direction 13 outwards. As it becomes apparent from fig. 5, which shows a perspective view of one of the stator segments 16 carringy the lamination stacks 17, end windings 30 of the stator windings are supported or held by the fingers 29. Concretely, the end windings 30 extend around the fingers 29 for in a U-shaped manner.

As it becomes apparent from fig. 3, a cutting plane of each of the front ends 31 is perpendicular with respect to the longitudinal direction 12, wherein another cutting plane is tilted with respect to the longitudinal direction 12. Hence, the front ends 31 have a U-shaped cross section, wherein the U-shaped cross section has a height that decreases with increasing distance away from the corresponding circumferential bar 26. The finger plate 28 is attached to and in contact with the front end face of the respective longitudinal bar 22 and, hence with the cutting plane which is perpendicular with respect to the longitudinal direction 12.

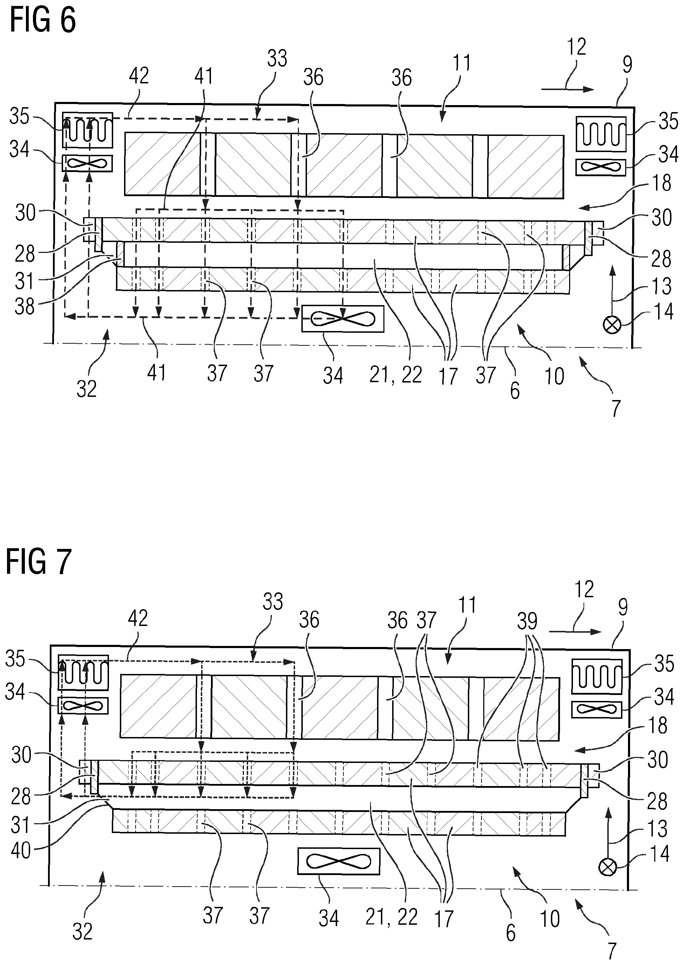

For cooling the electromagnetically active components of the stator 10 and the rotor 11, the electric generator 7 comprises an air cooling system 32, in which an airflow is flowing along an airpath 33. Heat is transferred from the electromagnetically active components to the air of the airflow. Fig. 6 shows a schematic sketch of the electric generator 7 with respect to the air cooling system 32. The airpath 33 is indicated by dashed arrows. The air cooling system 32 comprises several air pumps 34 being ventilators and several heat exchangers 35 for cooling the air of the airflow. According to the present embodiment, the air of the airflow is guided within a circuit, wherein, alternatively, a an open system can be realized, in which fresh air from the outside of the wind turbine 1 is provided through an air inlet of the housing 9 or the nacelle 3 and, after the air has flowing through the airpath, expelled into the outside via an air outlet of the housing 9 or the nacelle 3.

Regarding the airpath 33 indicated by the dashed arrows in fig. 6, the respective arrows are only shown on the left side of this figure, wherein, regarding the right side, the situation is equivalent and mirror-inverted. Firstly, the air passes the heat exchanger 35 and is then guided along the longitudinal direction 12 for cooling a radially outer side of the rotor 11, before it passes radial air channels 36 which lead to through the rotor 11 radially inwards. Then, the air flows through the air gap 18 along the longitudinal direction 12 for cooling a radially inner side of the rotor 11 and a radially outer side of the stator 10. Next, the air is guided along radial air channels 37 which lead through the stator 10 radially inwards. Then, the air flows along a radially inner side of the stator 10 along the longitudinal direction 12 to a longitudinal front end of the stator 10. Then the air is guided radially outwards, passing the end windings 30 and reaching the heat exchanger 35 again.

Regarding the open front ends 31 of the longitudinal bars 22, a sealing device 38 is arranged within the respective opening, wherein the sealing device 38 closes this opening to avoid that the air enters the hollow interior of the longitudinal bar 22. Otherwise, the airpath 33 would be changed such that certain sections of the airpath 33 would be bypassed which would be disadvantageous regarding the cooling effect.

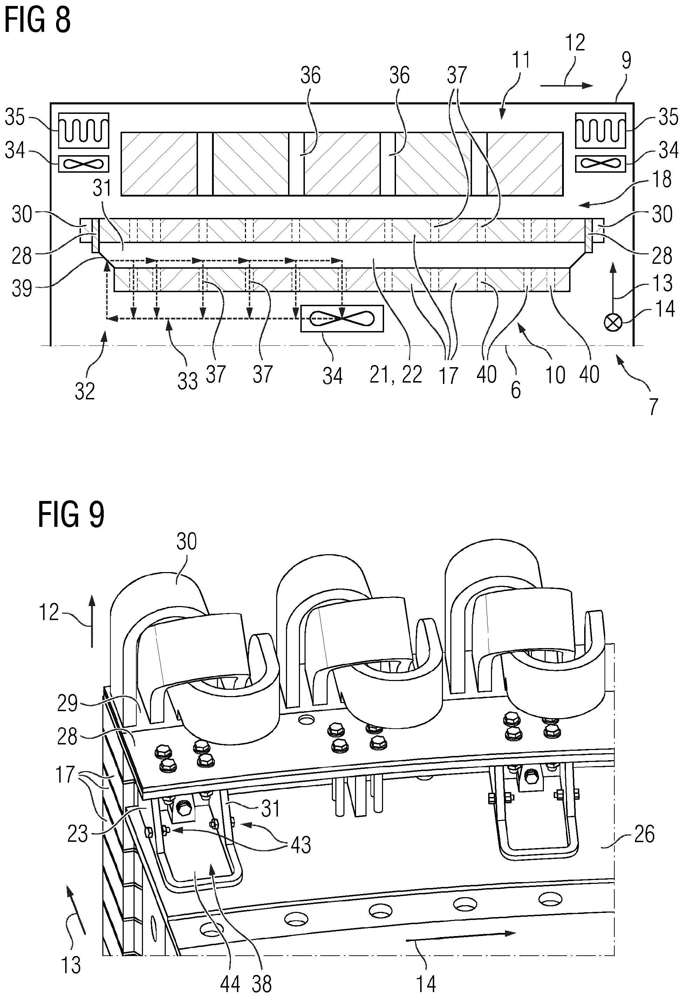

Figures 7 and 8 shows basically the same sketch as fig. 6, wherein two possible changes regarding the airpath 33, which could occur without having the sealing device 38, are indicated by dotted arrows. Regarding the possible change indicated in fig. 7, the attaching bores 24 can be understood as first openings 39 which lead into the hollow interior of the longitudinal bar 22. The opening of each of the open front ends 31 of the longitudinal bars 22 can be understood as second openings 40 which also lead into the hollow interior of the respective longitudinal bar 22. In this situation, the air would enter the interior of the longitudinal bar 22 by the first openings 39 and leave the interior by the second openings 40. Hence, the first openings 39 fluidly communicates with a first location of the air path 33 being the air gap 18 or radial air channels 37, respectively. The second opening 40 is arranged on a second location of the air path 33 which is arranged on the longitudinal front end of the stator 10. Hence, the part of the interior of the longitudinal bar 22 which leads from the first opening 39 to the second opening 40 bypasses a cooling section 41 of the air path in which heat is transferred from the radially inner side of the stator 10 to the air of the airflow which would decrease the cooling effect of the stator 10. To avoid this, the sealing device 38 closes the second opening 40.

Regarding the possible change indicated in fig. 8, the access bores 25 can be understood as second openings 40 which lead into the hollow interior of the respective longitudinal bar 22. The opening of each of the open front ends 31 of the longitudinal bar 22 can be understood as first openings 39 which also lead into the hollow interior of the respective longitudinal bar 22. In this situation, the air would enter the interior of the longitudinal bar 22 by the first opening 39 and leave the interior by the second openings 40. Hence, the first opening 39 is arranged on a first location of the air path 33 which is arranged on the longitudinal front end of the stator 10. The second openings 40 fluidly communicate with a second location of the air path 33 being the radially inner side of the stator 10 or radial air channels 37, respectively. Hence, the part of the interior of the longitudinal bar 22 which leads from the first opening 39 to the second opening 40 bypasses another cooling section 41 of the air path in which heat is transferred from the air gap 18 to the air of the airflow which would decrease the cooling effect of the stator 10 and the rotor 11. Furthermore, the part of the interior of the longitudinal bar 22 which leads from the first opening 39 to the second opening 40 bypasses a transfer section 42 of the airpath 33 in which heat is transferred from the air to a cooling component of the cooling system 32, i.e., to the heat exchanger 35, which would also decrease the cooling effect of the electric generator 7. To avoid this, the sealing device 38 closes the first opening 39.

Which of the foregoing changes would actually occur or if a combination of these changes would be realized without the sealing device 38 depends on parameters of the cooling system 32, e.g., on the operation power of the air pumps 34.

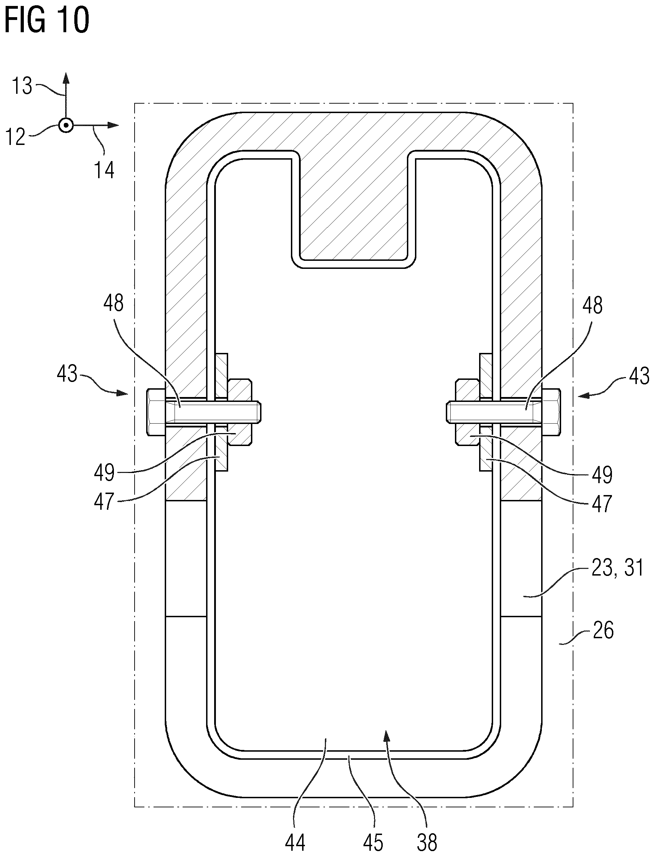

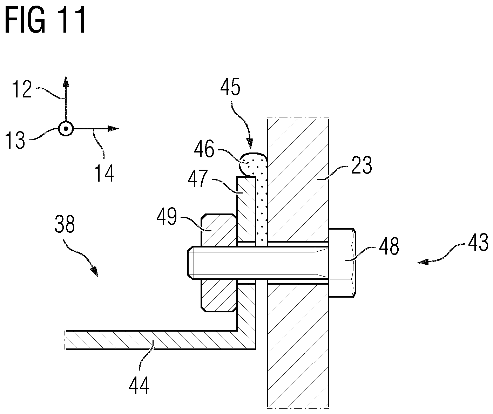

Next, the details regarding the sealing device 38 will be described. Fig. 9 shows a perspective close-up view of the stator segment 16 with respect to the open front ends 31 of the longitudinal bars 22 and the sealing devices 39. The sealing device 38 is mounted inside the respective opening 39, 40. The sealing device 38 is attached to two of the walls 23 by several attaching means which realizes screw connections 43 and particularly a loose fit between the sealing device 38 and the walls 23. Fig. 10 shows a cut view of one of the front ends 31, wherein the respective cutting plane extends perpendicular with respect to the longitudinal direction 12 and through the screw connections 43. Fig. 11 shows a cut view of one of the screw connections 43, wherein the respective cutting plane extends perpendicular with respect to the radial direction 13 and through the respective screw connection 43. The sealing device 38 comprises a sealing plate 44 which is smaller than the free cross sectional area of the longitudinal bar 22 such that a clearance 45 all around the sealing plate 44 remains between the sealing plate 44 and the walls 23. The clearance 45 is sealed by a flexible sealing material 46 which is shown only in fig. 11.

Next, details regarding the screw connections 43 will be explained with the help of figures 10 and 11, wherein fig. 11 shows a cut view through one of the screw connections 42. The sealing device 38 comprises two lateral flanges 47 which are arranged on and attached to opposite sides of the sealing plate 44. Each of the flanges 47 extends perpendicularly away from the sealing plate 44, namely away from the interior of the longitudinal bar 22, and is connected to one of the walls 23 by one of the screw connections 43. The respective flange 47 and the respective wall 23 have collinearly arranged bores, wherein a threaded bolt 48 runs through the bores, wherein the bolt 48 is secured by a nut 49 to attach the sealing device 38 to the respective longitudinal bar 22.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Electric generator (7) for a wind turbine (1), comprising a stator (11), a rotor (10), which is rotatably mounted with respect to the stator (11), and an air cooling system (32) for guiding an airflow flowing along an airpath (33) which extends through the electric generator (7), wherein the stator (11) comprises at least one structural component (21) having a hollow cross sectional profile and at least one first opening (39) and at least one second opening (40), wherein each of the openings (39, 40) leads into a hollow interior of the respective structural component (21), wherein the at least one first opening (39) is arranged on or fluidly communicates with a first location of the airpath (33), wherein the at least one second opening (40) is arranged on or fluidly communicates with a second location of the airpath (33), wherein within the at least one first opening (39) and/or within the at least one second opening (40) at least one sealing device (38) is arranged which prevents the airflow from flowing through the interior.

2. Electric generator (7) according to claim 1, **characterized by** a clearance (45) which is present between the sealing device (38) and at least one wall (23) of the respective structural component (21).

3. Electric generator (7) according to claim 2, **characterized in that** the clearance (45) is sealed by a sealing material (46).

4. Electric generator (7) according to one of the preceding claims, **characterized in that** the sealing device (38) is or comprises a sealing plate (44).

5. Electric generator (7) according to one of the preceding claims, **characterized in that** the sealing device (38) is attached to the respective structural component (21) by at least one attaching means, wherein the attaching means realizes a screw connection (43).

6. Electric generator (7) according to claim 4 and 5, **characterized in that** at least one lateral flange (47), extending particularly perpendicularly away from the sealing plate (44), is arranged on the sealing plate (44), wherein the screw connection (43) connects the at least one lateral flange (47) with the respective structural component (21).

7. Electric generator (7) according to one of the preceding claims, **characterized in that** the interior of the at least one structural component (21) which leads from the at least one first opening (39) to the at least one second opening (40) bypasses
- a cooling section (41) of the airpath (33) in which heat is transferred from a component of the electric generator (7) to be cooled to the air of the airflow and/or
- a transfer section (42) of the airpath (33) in which heat is transferred from the air of the airflow to a cooling component of the cooling system (32).

8. Electric generator (7) according to claim 7, **characterized in**
- **that** the cooling section (41) is an air gap (18) arranged between the stator (11) and the rotor (10) and/or a radially inner or outer side of the stator (11) and/or or a radially inner or outer side of the rotor (10), and/or
- **that** the cooling component is a heat exchanger (35) for conveying heat away from the airflow.

9. Electric generator (7) according to one of the preceding claims, **characterized in that** the at least one structural component (21) is a part of a support structure (20) of the stator (11) for supporting at least one lamination stack (17), wherein the at least one structural component (21) is a longitudinal bar (22) which extends along a longitudinal direction (12) of the electric generator (7).

10. Electric generator (7) according to claim 9, **characterized in that** the at least one longitudinal bar (22) comprises a rectangular cross section.

11. Electric generator (7) according to claim 9 or 10, **characterized in that** the at least one longitudinal bar (22) comprises at least one attaching bore (24) for attaching the lamination stack (17) to the respective structural component (21) and/or at least one access bore (25) for allowing tools to be inserted into the hollow interior of the respective longitudinal bar (22), wherein the at least one bore (24, 25) is the first opening (39) or the second opening (40).

12. Electric generator (7) according to one of the claims 9 to 11, **characterized in that** the at least one first opening (39) or the at least one second opening (40) is realized by at least one open front end (31) of the respective longitudinal bar (22), wherein the first location and/or the second location is arranged on a longitudinal front end of the stator (11).

13. Electric generator (7) according to claim 12, **characterized in that** a finger plate (28) which extends along a circumferential direction (14) of the electric generator (7) supports stator end windings (30), wherein the finger plate (28) is arranged on a front end face of the at least one longitudinal bar (22).

14. Stator device (50) for an electric generator (7) according to one of the preceding claims, wherein the stator device (50) is
- the stator (11) of the electric generator (7) or
- a stator segment (16) of the stator (11) of the electric generator (7).

15. Wind turbine (1), comprising an electric generator (7) according to one of the claims 1 to 13.
